(19) Europäisches Patentamt
European Patent Office
Office européen des brevets

(11) **EP 2 101 527 B1**

(12) **EUROPEAN PATENT SPECIFICATION**

(45) Date of publication and mention
of the grant of the patent:
**10.05.2017 Bulletin 2017/19**

(51) Int Cl.:
***H04W 16/02*** *(2009.01)*

(21) Application number: **08152788.9**

(22) Date of filing: **14.03.2008**

(54) **Transmit power - bandwidth characteristics in cellular networks**

Übertragung von Leistung - Bandbreite-Merkmalen in mobilen Netzwerken

Caractéristiques de largeur de bande et de puissance de transmission dans des réseaux cellulaires

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**16.09.2009 Bulletin 2009/38**

(73) Proprietor: **Deutsche Telekom AG**
**53113 Bonn (DE)**

(72) Inventors:
• **Gaspard, Ingo**
**64372 Ober-Ramstadt (DE)**
• **Hasselbach, Philipp**
**35578 Wetzlar (DE)**
• **Klein, Anja**
**64287 Darmstadt (DE)**

(74) Representative: **Vossius & Partner**
**Patentanwälte Rechtsanwälte mbB**
**Siebertstrasse 3**
**81675 München (DE)**

(56) References cited:
**EP-A- 0 949 832      WO-A-98/33349**
**DE-A1- 10 309 618**

• **OZGUR OYMAN ET AL: "Non-Ergodic Power-Bandwidth Tradeoff in Linear Multi-hop Networks" INFORMATION THEORY, 2006 IEEE INTERNATIONAL SYMPOSIUM ON, IEEE, PI, 1 July 2006 (2006-07-01), pages 1514-1518, XP031032467 ISBN: 978-1-4244-0505-3**

## Description

Field of the invention

This invention relates to a system and method for planning and/or operating a cellular network, wherein a plurality of base stations provide resources to a number of users. Transmit power - bandwidth characteristics are derived for at least one base station in the cellular network and evaluated for planning and operational purposes.

Background of the invention

In cellular networks, such as cellular mobile radio networks, several users are assigned to a number of base stations (BS), wherein each BS can dispose of a certain amount of resources in order to give service to all its users. In order to assure sufficient quality of the service that the BS provides, a sufficient amount of each BS's resources must be allocated to its users.

In cellular networks, the same resources are usually used by several cells in order to increase the efficiency of resource usage, see e.g. J. Zander, S.-L. Kim, "Radio Resource Management For Wireless Network", Artech House, Norwood, USA, 2001. As a consequence, interference between different cells arises and a change in the use of resources of one cell has effect on the whole network.

Transmit power and transmit bandwidth are two possible types of a BS's resources. The respective service quality provided to a BS's user can, for example, be expressed in terms of the data rate with that a user receives data. Consequently, service quality requirements can, for example, be expressed in terms of data rate requirements.

The amount of resources required by each BS depends on different factors. First, it is influenced by the service quality requested by its users. Second, the propagation situation between the BS and its users influences the required amount of resources, since in the case of bad propagation conditions, more resources are required to provide the same service quality, compared to the case of good propagation conditions. Finally, interference affects the amount of resources required, since more resources are required to provide the same service quality if interference increases.

In a single link existing between a BS and its user, the data rate with that the user receives data depends on the two mentioned resources, namely the transmit bandwidth and transmit power according to

$$DR = B \cdot \log_2\left(1 + \frac{S}{PL \cdot (I + N)}\right)$$

with $DR$ the data rate, $B$ the transmit bandwidth, $S$ the transmit power, $PL$ the pathloss between transmitter and receiver, and $I$ and $N$ the interference power and the noise power, respectively, further details are given in C. Shannon, "A mathematical Theory of Communication", Tech. Rep., Bell Systems Technical Journal, 1948. This relation clearly shows that there exists an interdependence of transmit bandwidth and transmit power and that a certain data rate over e.g. a radio link can be achieved with several different combinations of values of transmit bandwidth and transmit power.

However, when considering planning and operating a cellular network, the complex composition of all links existing between base-stations and all of their corresponding users must be accounted for in a joint manner. For this purpose, information on the environment of a cell, on the behavior of users and on the service requirements of the users are currently gained based on topographic, demographic and morphologic data. The storage and/or evaluation of such data requires much space and the processing is very complex and costly due to the large amount of data involved.

The joint interdependence of transmit power and transmit bandwidth considering all links of a BS is up to today not used. For example, the decision to accept or reject a call or session request and the decision to carry out a hand over of a user from one cell to a neighboured cell is currently based on certain Key Performance Indicators (KPIs) that represent certain physical variables of a radio link or certain performance properties of the radio link. The decision on acceptance, rejection or the handover of a user is not made regarding the complete cell and its corresponding BSs' resource situation. The adaptation of parameters determining acceptance or rejection of a user or the decision for a hand over to a change in resource assignment on parameters is done based on estimations of how certain performance-KPIs are expected to develop, but once again not regarding the complete cell and the resource situation of the corresponding BSs. Another example is given by the assignment of resources within cellular networks, such as for optimization purposes, which is currently done manually in a basic and rudimentary way not considering the interdependence between transmit power and transmit bandwidth.

EP-A-0 949 832 discloses a method and system for allocating a frequency band within a given frequency spectrum of a telecommunication system. The respective centre frequency for a candidate transmission is allocated based on the evaluation of allocation decision values. The respective candidate transmission has a certain power/frequency characteristic representing the power of the candidate transmission as a function of frequency.

DE-A-10 30 9618 relates to allocating a resource to individual users of voice or data stream channels in a GSM mobile network.

## Summary of the invention

The invention is defined in the claims.

The present invention is related to an improved system and method for planning and/or operating a cellular network, which overcomes problems adhered to storing and/or evaluating the properties of individual links existing between a BS and a user. In contrast, the present invention considers that there exists an interdependence of transmit bandwidth and transmit power for each BS, which jointly comprises information on the cell, its environment, interferers and BS's users and their behavior. In this sense, the interdependence of transmit power and transmit bandwidth reveals information on the state of a cell, on the environment of the BS and on all the users of the cell and their behaviour collectively. This information can be represented in a very compact form in a power-bandwidth characteristic curve, which can be derived, for example, by using only two curves and can thus be easily stored and evaluated.

The information collected in the power-bandwidth characteristic curve for each BS, can be used in accordance with the present invention to determine the efficiency of a resource allocation and/or the influence of a user on the resource allocation, and is therefore of great importance for planning and operating cellular networks, in particular when optimization is concerned. This holds in particular, when the minimization of the power consumption and/or the required bandwidth of at least one of a cellular network's base stations is concerned.

Further, the present invention also provides an efficient method to measure the interdependence of transmit power and transmit bandwidth to determine the power-bandwidth characteristic curve. This method can be performed "online" during normal operation of the network and is thus well suited for practical application, without requiring additional measurements or signaling, compared to today's systems.

In principle, it is possible to derive a probability density function (PDF) or a cumulative distribution function (CDF) of the bandwidth that a BS requires to provide sufficient service quality to its users, such as for example from the distribution of the attenuation between the BS and the users or from the distribution of the signal to noise and interference ratio (SINR) that the users experience. The derivation depends on the number of users (or more precisely the number of "active users"), their service quality requirements and on the ratio of transmit power $P_S$ to noise power $P_N$ plus a certain reference interference power $P_I$ for example at the location of the BS. This ratio will in the following be called power ratio $\Gamma$ and is defined as

$$\Gamma = \frac{P_S}{P_N + P_I} \ .$$

It is also embraced by the present invention to derive the stochastic properties of the required bandwidth of the BS, such as the mean and the variance. The stochastic parameters can be expressed depending on the power ratio $\Gamma$ but independent of the number of users and their service quality requirements and the corresponding outage property. From the stochastic properties, the actually required bandwidth can be calculated if the number of users (or more precisely the number of "active users") and their service requirements are known.

Carrying out these derivations for different values of $\Gamma$, a set of PDFs or CDFs, respectively, is obtained. The relation between the transmit power, which is contained in the power ratio $\Gamma$, and the corresponding transmit bandwidth can be constructed from such a set of curves by extracting from the CDFs for the different values of $\Gamma$ the bandwidth values that correspond to a certain outage probability. This relation will in the following be referred to as the power-bandwidth characteristic curve. The power-bandwidth characteristic curve thus describes the relation between the transmit power and the respective bandwidth required by the BS.

The relation between the transmit power and the stochastic properties of the required bandwidth can be constructed by evaluating the stochastic properties of the bandwidth required by a single user for the transmission of a certain data rate unit $DR_{unit}$ for different values of $\Gamma$. The relation between the transmit power and the stochastic properties of the required bandwidth can therefore be represented by just two curves, one for the mean and one for the variance of the required bandwidth. Note that the relation between transmit power and the stochastic properties of the bandwidth is independent of the outage probability. Using the stochastic properties of the bandwidth required by a single user for the transmission of a data rate unit $DR_{unit}$, the power-bandwidth characteristic curve of a BS can be calculated for a certain outage probability by using the formula

$$B_{P_{out}}(\Gamma) = erf^{-1}(1 - 2p_{out})\sqrt{2\sigma^2(\Gamma)\sum_{u=1}^{U}\left(\frac{DR_u}{DR_{unit}}\right)^2} + \mu(\Gamma)\sum_{u=1}^{U}\frac{DR_u}{DR_{unit}} \quad [\text{II}]$$

with $B_{P_{out}}$ the required bandwidth, $p_{out}$ the chosen outage probability, $erf^{-1}$ the inverse error function, U the number of users (or more precisely the number of "active users"), $\mu(\Gamma)$ and $\sigma^2(\Gamma)$ the mean and the variance of the bandwidth required by a single user for the transmission of a certain data rate unit $DR_{unit}$ as a function of $\Gamma$ and $DR_u$ the service quality requirement of user $u$, expressed as a data rate requirement. The power-bandwidth characteristic curve can therefore be calculated for arbitrary numbers of users with individual service quality requirements and for any outage probability, based on the two functions or curves $\mu(\Gamma)$ and $\sigma^2(\Gamma)$ representing the relation between transmit power and stochastic properties of the bandwidth required by a single user for the transmission of a data rate unit $DR_{unit}$. As a consequence, only two curves are required to represent the interdependence of transmit power and transmit bandwidth of a cell. Note that the outage probability $p_{out}$ is defined in accordance with the present inventions as the probability that the bandwidth, referred to as e.g. $B_{p_{out}}(\Gamma)$, of the cell is less than the sum of the bandwidths required by the active users of the cell.

For the practical application, empirical distributions of the required bandwidth of a BS can be calculated from measurements, such as by measuring the attenuation between BS and users or by measuring the SINR of the users. Further, the calculation of several empirical distributions of the required bandwidth for different values of $\Gamma$ is possible using only a single set of measurement data, which can also be collected during normal operation of the cellular network.

Using attenuation measurements to calculate the distributions of the required bandwidth, the power-bandwidth characteristic curve of a BS reflects the propagation situation between the BS and the users, and thus the environment of the BS and the users, the distribution of the users over the cell area and the behaviour of the users.

Using SINR measurements to calculate the distributions of the required bandwidth, the power-bandwidth characteristic curve reflects the propagation situation between the BS as well as the interference situation of the users. This way, the power-bandwidth characteristic curve represents the environment of the BS and the users, the distribution of the users over the respective cell area and the behaviour of the users, and at the same time, it also represents the environment of the cell, the distribution of the interferers and the behaviour of the interferers. It should be mentioned, that in order to calculate distributions of the required bandwidth for different values of $\Gamma$ using SINR measurements, the value of $\Gamma$ at the time of each measurement, i.e., information on the power of interference, signal and noise at the time of each measurement, has [I2]to be available.

Also in practical application, where empirical distributions are used, the interdependence of transmit power and the stochastic properties of the required bandwidth of a BS can be calculated from the measurement data. This interdependence is again independent of the outage probability and can additionally be represented independent of the number of users, and their service requirements, such that e.g. only two curves are required to express this interdependence. Note that the measurements required to calculate the interdependence of transmit power and transmit bandwidth represent standard measurements which are collectable in today's systems.

The power-bandwidth characteristic curve of a BS represents the environment of the BS and the users, the distribution of the users over the cell area and the behaviour of the users and possibly also the environment of the cell, the distribution of the interferers and the behaviour of the interferers. As already mentioned, this information can be represented in a very compact form and thus easily be stored and evaluated. The power-bandwidth characteristic curve of a BS is preferably used to effectively measure, describe and quantify, record and evaluate the state of any cell, and thus also the state of the whole network.

Further, by deriving the power-bandwidth characteristic curves of a BS or a plurality of BSs, for different time intervals, such as for example subsequent time intervals, the change in the environment, the user behaviour, the service demand and the interferer behaviour can be shown and detected for the respective part of the network and for the different time periods.

The functions or curves $\mu(\Gamma)$ and $\sigma^2(\Gamma)$ representing the mean and variance of the required bandwidth for different values of $\Gamma$ are interesting parameters for standardisation since they describe the state of the cell, jointly regarding its interferers, its environment and its users and their behaviour. Furthermore, the curves are easy to determine, to transmit and to store, and can supports several promising approaches in the field of network planning, operation and optimization.

The interdependence of transmit power and transmit bandwidth can be applied to evaluate the influence of one or several users on the efficiency of a resource allocation. Since the interdependence of transmit power and transmit bandwidth can be represented in a very compact and revealing way, efficient and advanced techniques for any task related to user accommodation can be developed. In particular, the techniques for tasks related to user accommodation enabled by the knowledge of the interdependence of transmit power and transmit bandwidth are especially in connection with so called self-x functionality for future mobile radio networks of great importance.

Any technique related to user accommodation can be carried out applying the power-bandwidth characteristic curves. Since any user has influence on the shape and position of the power-bandwidth characteristic curves of a BS, the decision to accept or reject a user, to hand it off to another cell or BS, or to keep it, or to add or remove a cell from a neighbour list, to mention some examples, can be taken by determining if the influence of a user on the power-bandwidth characteristic curve of a BS is desired, or at least allowed, or not. All users should always be served by the BS on which's power-bandwidth characteristic curve it has the most favourable, or the least unfavourable, influence. Because the power-bandwidth characteristic curve of a BS determines the efficiency of the resource usage of the BS, this technique assures that the efficiency of the resource assignment is maintained or increased or that the smallest possible decrease in efficiency is realized.

Self-healing is a very important technique and related to user accommodation and can be very efficiently implemented using the power-bandwidth characteristic curves. After a BS fails, surrounding BSs are assigned the users that have lost coverage due to the BS failure. The surrounding BSs accept users according to their power-bandwidth characteristic curves in a desired, optimal or the best possible way and update their power-bandwidth characteristic curves, such that the additional users, and thus also the additionally covered area, are considered in the power-bandwidth characteristic curves. Subsequently, the surrounding BSs participate normally in network planning, operation and optimization, using their updated power-bandwidth characteristic curves and they can determine from the updated power-bandwidth characteristic curves the amount of resources they require in order to give sufficient service quality to all of its users, including the new users, and demand additional resources, if necessary.

Other techniques connected with user accommodation and related to the present invention are, for example, self-healing, load balancing, handover parameter optimisation, call acceptance parameter optimisation, neighbour cell list optimisation, to name a few.

The interdependence of transmit power and transmit bandwidth determines the efficiency of the resource allocation and reveals information on the effect of a change in the resource allocation in the cells of the network. Since the interdependence of transmit power and transmit bandwidth can be represented in a very compact and revealing way, efficient and advanced techniques for planning, operating and optimizing the resource allocation in cellular networks can be developed.

The techniques for planning, operation and optimisation of cellular networks enabled by the knowledge of the interdependence of transmit power and transmit bandwidth are especially in connection with so called self-x functionality for future mobile radio networks of great importance.

In the scope of adapting a network to changing user behaviour and changing environments, power-bandwidth characteristic curves allow to determine suitable combinations of transmit power and transmit bandwidth that can be assigned to a BS or cell in order to provide its users with sufficient service quality.

In the scope of network optimization, power-bandwidth characteristic curves reveal if it is more efficient to assign additional power or additional bandwidth to a BS or cell that requires more resources. The same way, power-bandwidth characteristic curves can be applied to decide if it is more efficient to assign less power or less bandwidth to a BS or cell that disposes of too many resources.

Further, antenna patterns can be optimised with respect to the efficiency of resource allocation by evaluating the change of the power-bandwidth characteristic curves, and thus the change in the efficiency of the resource assignment, of a cell for changes in the antenna pattern.

A BS that accommodates many users that have very poor signal reception can be identified by the shape and the position of its power-bandwidth characteristic curves. Areas of weak coverage or coverage holes can thus be detected by using power-bandwidth characteristic curves.

It should be mentioned, that although the downlink has been used for explanation of the proposed system and method for planning and/or operating a cellular network, the invention is not limited to the downlink and can also be applied in the uplink. Further, the system and method described are applicable for single-input-single-output (SISO) systems, as well as multiple-input-multiple-output (MIMO) systems.

It should also be noted, that different power-bandwidth characteristic curves might have to be considered when different service classes are involved. In this case, the services could be divided into, for example, three classes depending on their data rate requirements, i.e. services with low, medium and high data rate requirements. Users may then be treated according to the class or classes of service they demand.

One aspect of the present invention relates to a method of planning and/or operating a cellular network, wherein a plurality of BSs provide resources to a number of users. In the method, the power-bandwidth characteristic curve of each of the BSs is determined, which describes the interdependence relationship between transmit power $P_S$ and cell bandwidth $B_{P_{out}}$ required by the base station to provide resources to U users. This required cell bandwidth is with a probability of 1 - $p_{out}$ sufficient to provide the $U$ users with sufficient resources to satisfy the service requirement $DR_u$ of each user $u$. The service requirement $DR_u$ could, for example, be expressed as a data rate requirement. At least one characteristic property of each base station and/or cell is then identified from the at least one power-bandwidth characteristic curve, and based on comparison and/or evaluation of the identified characteristic properties, resources are allocated and/or users are accommodated in the cellular network. In this sense, according to the present invention, the identified at least one characteristic property provides information about the respective base station and/or cell which can be taken from the corresponding power-bandwidth characteristic curve, including for example information about the required transmit power or bandwidth of the base station, or the corresponding spectral efficiency of the cell served by the base station. Here, the spectral efficiency can for example relate to the average spectral efficiency of the cell or the spectral efficiency at the cell's edge.

In a preferred embodiment of the invention, the power-bandwidth characteristic curve is determined by describing stochastic properties of the required bandwidth as functions of the transmit power. The respective stochastic properties of the required bandwidth can, for example, be given by the mean $\mu(\Gamma)$ and variance $\sigma^2(\Gamma)$ of the required bandwidth defined as functions of the power ratio $\Gamma = \dfrac{P_S}{P_N + P_I}$, wherein $P_N$ is the noise power and $P_I$ is the interference power at the location of the base station. It is further preferred, assuming that the mean $\mu(\Gamma)$ and variance $\sigma^2(\Gamma)$ have been derived, that the required bandwidth of the power-bandwidth characteristic curve is determined by evaluating for different power ratio values the relation already mentioned above:

$$B_{p_{out}}(\Gamma) = erf^{-1}(1 - 2p_{out})\sqrt{2\sigma^2(\Gamma)\sum_{u=1}^{U}\left(\frac{DR_u}{DR_{unit}}\right)^2} + \mu(\Gamma)\sum_{u=1}^{U}\frac{DR_u}{DR_{unit}}.$$

to detect the power-bandwidth characteristic curve. The respective mean $\mu(\Gamma)$ and variance $\sigma^2(\Gamma)$ of the required bandwidth can preferably be determined by calculating a probability density function of the required bandwidth, or alternatively by calculating a cumulative distribution function of the required bandwidth.

It is also preferred that the mean $\mu(\Gamma)$ and variance $\sigma^2(\Gamma)$ of the required bandwidth are determined on the basis of measurements of the attenuation between the base station and its users, or alternatively on the basis of measurements of the Signal to Noise and Interference Ration SINR at the base station's users' locations.

In an alternative preferred embodiment the power-bandwidth characteristic curve is determined by measuring the transmit power and required bandwidth at the location of the base station.

Preferably, measurements are used to calculate empirical distributions of the required bandwidth, preferably by having the measurements comprised in a single set of measurement data and/or by having the measurements collected online during normal operation of the cellular network.

Also in a preferred embodiment of the invention, the at least one characteristic property of each base station and/or cel identified from a power-bandwidth characteristic curve, is given by the transmit power or bandwidth required by the base station, or in another preferred alternative by the spectral efficiency of the cell. The spectral efficiency can preferably be determined by evaluating on the basis of the normalized power-bandwidth characteristic curve, such as for example by evaluating a slope or gradient thereof.

According to another preferred embodiment of the invention, the at least one characteristic property of each BS and/or cell is identified by assuming different cases of having at least one user of one of the BSs to be accommodated by another BS. Based on these different cases of accommodation of users, the corresponding plurality of changes in the power-bandwidth characteristic curve of the BS are determined and subsequently evaluated to further determine at least one characteristic property of the BS and/or cell.

Further, in a more preferred embodiment of the invention, the step of allocating resources or accommodating users of the cellular network comprises having a user reallocated to be accommodated by another BS. In an even more preferred embodiment the reallocation of the user takes place in a self-healing process, when at least one of the BSs is unable to adequately serve its users because of malfunctioning.

In another preferred embodiment, the at least one characteristc property of each BS and/or is identified by assuming different cases of having BSs accommodating a new user entering the cellular network. Based on the different cases of accommodating the new user a corresponding plurality of changes in the power-bandwidth characteristic curve of the BS is determined and subsequently evaluated to further determine the at least one characteristic property of each base station and/or cell.

Further, in a more preferred embodiment, the step of allocating resources or accommodating users of the cellular network comprises having one of the plurality of BSs accepting to provide resources to the incoming new user.

According to another preferred embodiment of the invention, the evaluation of said plurality of changes in the power-bandwidth characteristic curve comprises determining as a characteristic property the corresponding plurality of changes in the transmit power or bandwidth required by the base station.

In an alternative preferred embodiment of the invention, the evaluation of said plurality of changes in the power-bandwidth characteristic curve comprises determining as a characteristic property the corresponding plurality of changes in spectral efficiency of the cell. The respective changes in spectral efficiency of the cell are preferably determined by evaluating the change in gradient or slope of the normalized power-bandwidth characteristic curve.

In a preferred embodiment of the invention, the step of allocating resources in the cellular network comprises changing the amount of bandwidth disposable by, and/or the amount of transmit power required by, at least one of the plurality of base stations.

According to another preferred embodiment of the invention, the step of allocating resources in the cellular network comprises optimizing the power consumption and/or the required bandwidth of at least one of the plurality of base stations.

According to yet another preferred embodiment of the invention, the step of allocating resources in the cellular network comprises optimizing the distribution of transmit power or bandwidth required by at least two of the plurality of base stations.

In another preferred embodiment of the invention, the method of planning and/or operating the cellular network, is repeated in subsequent time-intervals.

The second aspect of the invention relates to a system of planning and/or operating a cellular network, wherein a plurality of base stations provide resources to a number of users. The system comprises means for determining for each base station a power-bandwidth characteristic curve, which describes the interdependence relationship between transmitpower $P_S$ and bandwidth $B_{P_{out}}$ required by the base station to provide resources to U users, such that the service requirement $DR_u$ of each user $u$ is satisfied with an cell outage probability $p_{out}$. The system also comprises means for identifying at least one characteristic property of each base station and/or cell from the at least one power-bandwidth characteristic curve, and further means for allocating resources and/or accommodating users in the cellular network, based on comparison and/or evaluation of said identified at least one characteristic property of the base stations and/or cell.

Brief description of the drawings

Preferred embodiments of the invention are described in more detail below with reference to the attached drawings, which are by way of example only.

Fig. 1a, 1b   shows the position probability of the users (or more precisely "active users") over the cell area, Scenario 1 to 4;

Fig. 2a, 2b   shows the cumulative distribution functions (CDFs) of the required bandwidth of the four scenarios of Fig. 1 for different values of $\Gamma$;

Fig. 3a, 3b   shows the interdependence of the transmit power and the stochastic properties, i.e. the mean and the variance with the curves on the right hand side showing the interdependences normalised at a $\Gamma$ of 80dB, of the required bandwidth for all four scenarios of Fig. 1;

Fig. 4   shows power-bandwidth characteristic curves for Scenarios 1 to 4 of Fig. 1;

Fig. 5   shows power-bandwidth characteristic curves for Scenarios 1 to 4 of Fig. 1, normalised to the bandwidth at the $\Gamma$ of 80dB;

Fig. 6a, 6b   shows the position probability of the users (or more precisely "active users") over the cell area, Scenario 5 to 8;

Fig. 7   shows power-bandwidth characteristic curves for Scenarios 5 to 8 of Fig. 6;

Fig. 8   shows power-bandwidth characteristic curves for Scenarios 5 to 8 of Fig. 6, normalised to the bandwidth at the $\Gamma$ of 80dB..

Detailed description of preferred embodiments

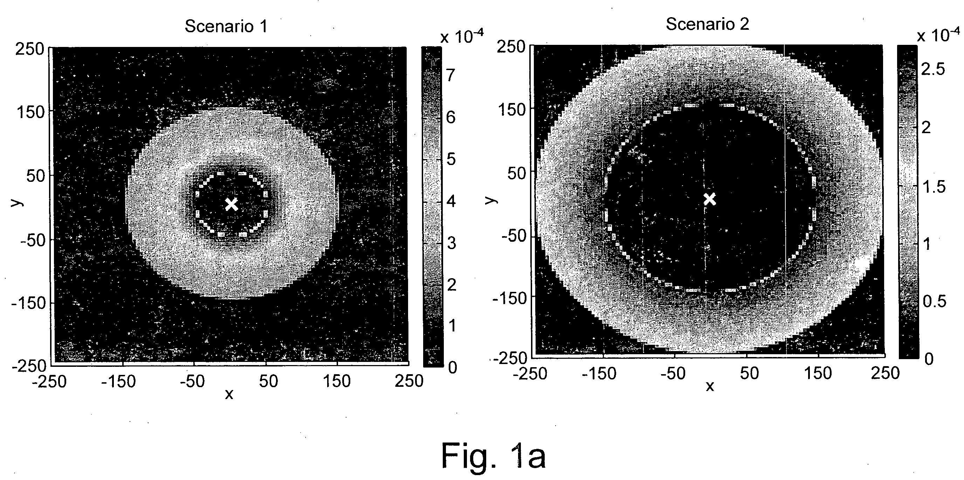

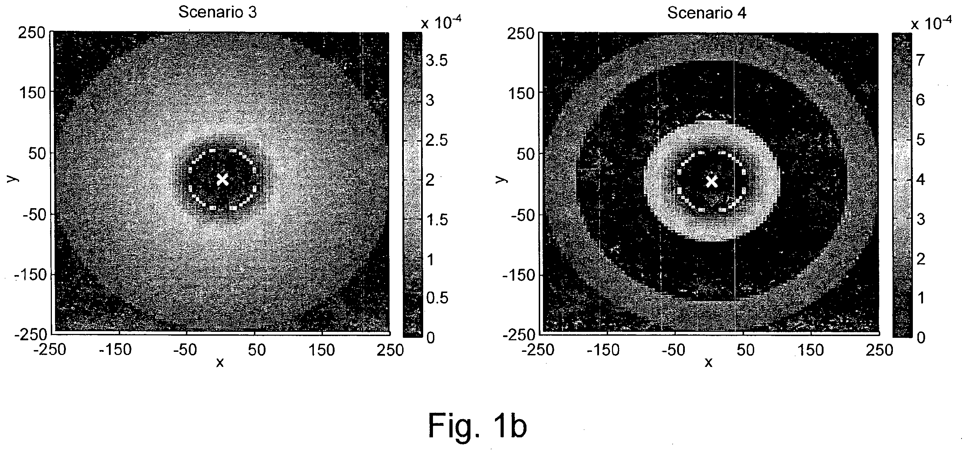

Fig. 1 shows four scenarios 1 to 4, which are considered in the following by reference to a preferred embodiment of the present invention. The figure indicates the position probability of the users (or more precisely the "active users") over a cell area being served by a BS, which is indicated with a cross at the center of the pictures. The respective scenarios differ in the locations of the active users, so that different distances between users and BS and therefore also different pathlosses are probable, depending on the scenario. In the following considerations, it is assumed that within all scenarios, the same number of users are active and that they always have the same service quality requirements. Only the distribution of the users over the cell area is different, according to the position probabilities shown in Fig. 1.

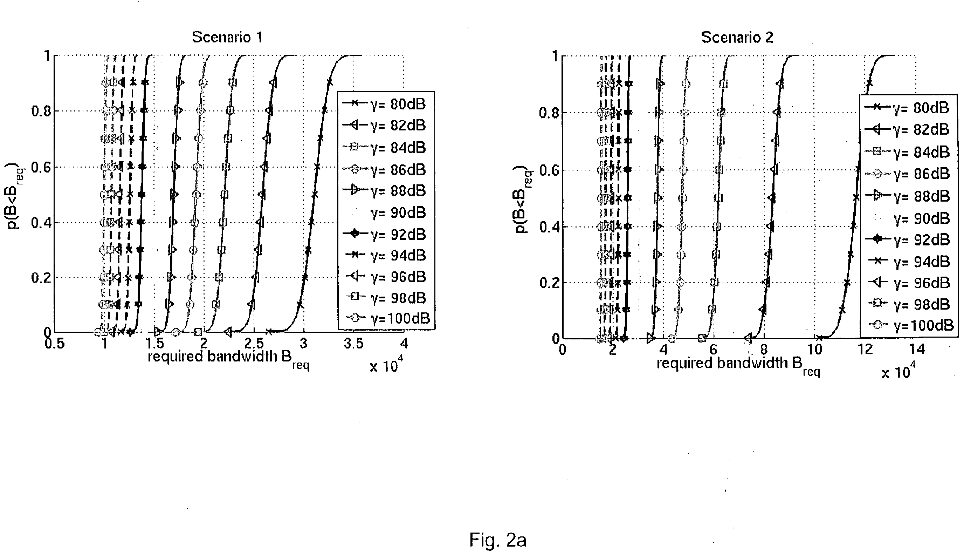

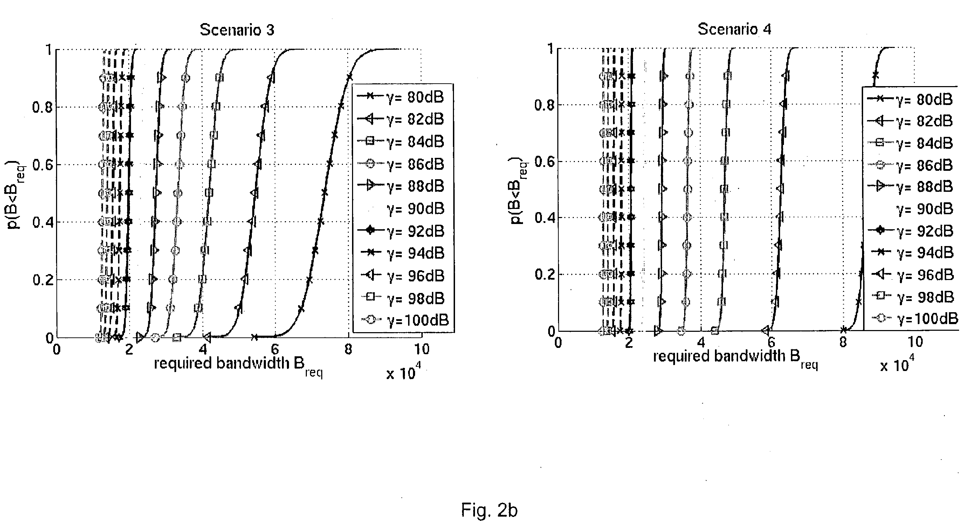

Fig. 2 shows the corresponding cumulative distribution functions (CDF) of the required bandwidth for different values of the power ratio Γ. The CDFs have been calculated for the four scenarios 1 to 4 from one single set of attenuation measurements per scenario. Here, it is assumed that 100 users are simultaneously active, each one having a service quality requirement of 1 kbit/s. The curves for each of the scenarios have been calculated from the corresponding single set of attenuation measurements for the respective scenario. As an alternative, SINR measurements could be used, they enable a representation of the interference situation, but information on the transmit power of all interferers would then also be required.

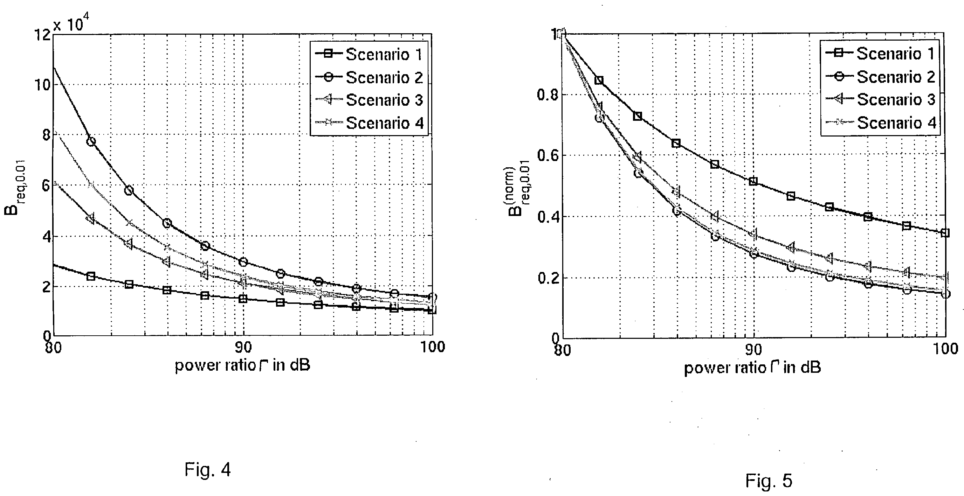

Fig. 4 shows the corresponding power-bandwidth characteristic curves, constructed from the CDFs given in Fig. 2, in accordance with the present invention, for each of the Scenarios 1 to 4 by assuming 1% outage probability. The characteristics have been constructed by extracting the values of the bandwidth that correspond to a probability of 0.99 from all curves of Fig. 2. As a result, Fig. 4 shows the power-bandwidth characteristic curves positioned in a coordinate system and Fig. 5 shows the corresponding normalized power-bandwidth characteristic curves, which have been normalized to their maximum values. By comparing Fig. 4 and Fig. 5 with the corresponding Scenarios of user position probabilities shown in Fig. 1, it can be seen that the position and/or shape of the power-bandwidth characteristic curves in the coordinate system and the shape of the corresponding normalized power-bandwidth characteristic curves, can be used as characteristic properties of the BS and/or cell to e.g. identify the Scenario corresponding to the BS and/or cell under consideration.

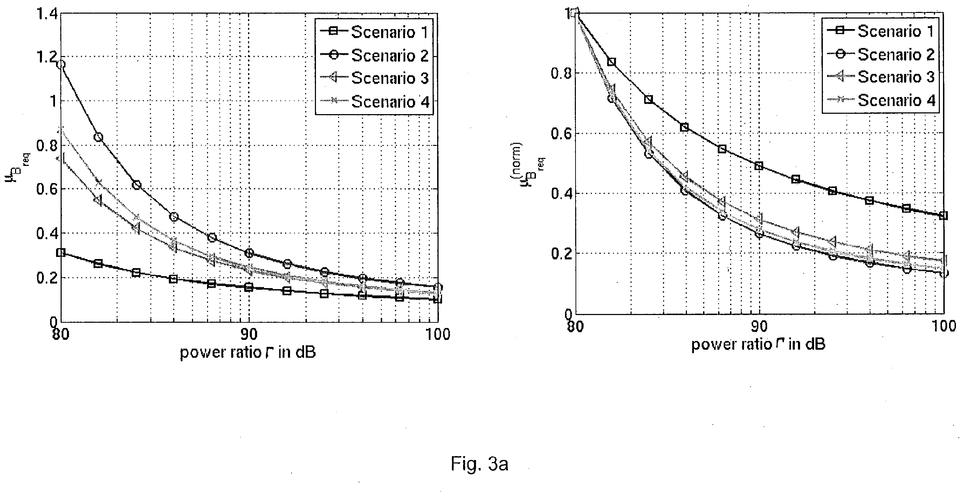

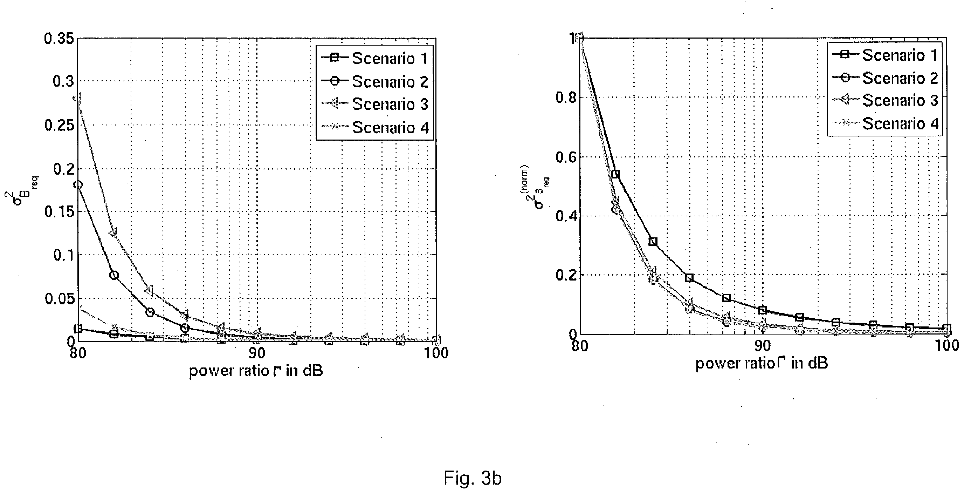

While Fig. 4 and Fig. 5 hold exclusively for a certain number of active users with certain service quality requirements, Fig. 3 shows the relation of $\gamma$ and the stochastic parameters, mean $\mu(\Gamma)$ and variance $\sigma^2(\Gamma)$, of the required bandwidth for each of the four scenarios 1 to 4, which are independent of the outage probability and the number of active users and their service quality requirements. The curves on the right hand side in Fig. 3, show the interdependences normalised to a Γ of 80dB.. It is evident from Fig. 3, that the different positions of the curves within the coordinate system and the different shapes of the curves result for each of the different scenarios 1 to 4. From the curves on the left hand side in Fig. 3, the power-bandwidth characteristic curves for each of the Scenarios 1 to 4 of Fig. 1 can be calculated for almost any combination of number of active users and service quality requirements, if the number of active users and their service quality requirements are known, such as for example by evaluating the relation

$$B_{p_{out}}(\Gamma) = erf^{-1}(1 - 2p_{out})\sqrt{2\sigma^2(\Gamma)\sum_{u=1}^{U} DR_u^2} + \mu(\Gamma)\sum_{u=1}^{U} DR_u$$

assuming the data rate unit $DR_{unit}$ = 1. Consequently, the curves of the plots of Fig. 3, in accordance with the preferred embodiment, are specific to the scenarios but not to the users and their behavior.

Figures 4 and 5 can also be used in accordance with another preferred embodiment of the present invention, to find combinations of transmit power, or a value for Γ, respectively, and transmit bandwidth that are suited to give sufficient service quality to all of the users of a BS or the respective cell, since all points on a power-bandwidth characteristic curve represent suitable combinations. Fig. 4 also allows to compare the amount of resources required by the BS in the different scenarios 1 to 4. As an example, the BS in Scenario 1 requires fewer resources than the BS in Scenario 2.

The power-bandwidth characteristic curves of Fig. 4 reveal characteristic properties of each BS by their slope or gradient, which e.g. indicate if it is more efficient to increase the transmit power or the transmit bandwidth in case a BS needs more resources. For the BS in Scenario 2, it is more efficient to increase the transmit power, compared to the BS in Scenario 1, since an increase in power leads to larger "savings" in bandwidth for the BS of Scenario 2 than for the BS in Scenario 1. Assuming that additional resources are requested and required by two BS, each belonging to each of the Scenarios 1 and 2, it is more efficient to allocate more transmit power to the BS of Scenario 2 and more bandwidth to the BS of Scenario 1. The same way, the most efficient resource to decrease can be selected if a BS or cell has too many resources. Further, the number of BS considered can easily be increased as required to efficiently plan and/or operate the cellular network. The efficiency of a resource allocation is determined by comparing its effect on the BSs or cells involved.

By way of determining the respective characteristic properties related to a number of BSs and/or cell, i.e. by evaluating their power-bandwidth characteristic curves, the respective comparison of the efficiency of a resource allocation between the different BSs can be made on the basis of comparing the characteristic properties, to determine and/or optimize efficient measures of resource allocation in the cellular network.

The respective approach can easily be extrapolated to allocate resources of a high number of BSs in an efficient manner, even by taking the whole network into account

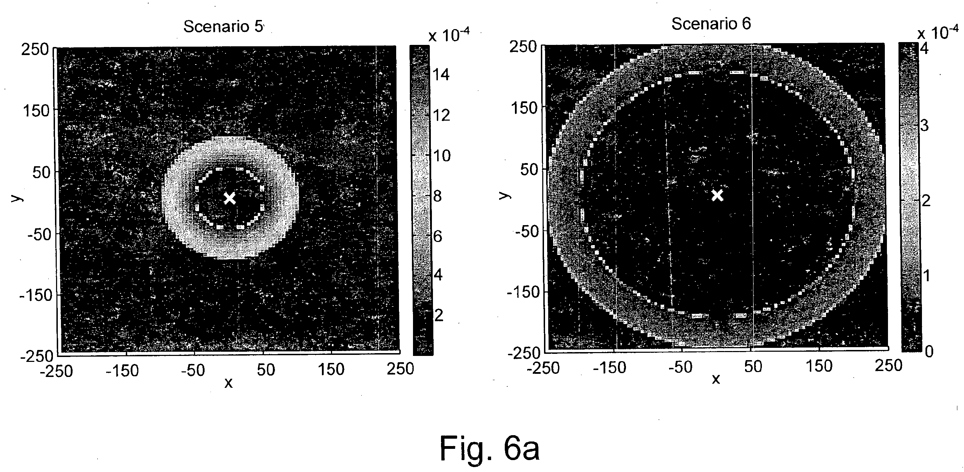

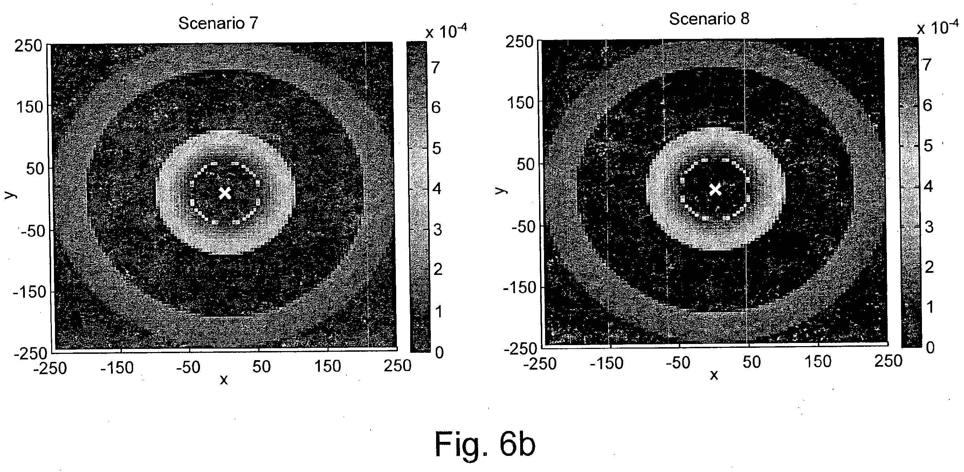

Fig. 6 shows the position probability of users (or more precisely the "active users") in a cell area being served by a BS, indicated with a cross at the center of the pictures, for the four scenarios 5-8 considered by reference to another preferred embodiment of the present invention.

Here, the same number of users with the same service quality requirements are active in Scenario 5 and Scenario 6. Further, the Scenario 7 is the combination of Scenario 5 and Scenario 6, such that in Scenario 7, the number of active users is double the number of active users of Scenario 5 or Scenario 6. Scenario 8 is the combination of half of the active users from each of Scenario 5 and Scenario 6, i.e. the scenario is the same as Scenario 7, concerning the distribution of the users, but only half the number of users are accommodated.

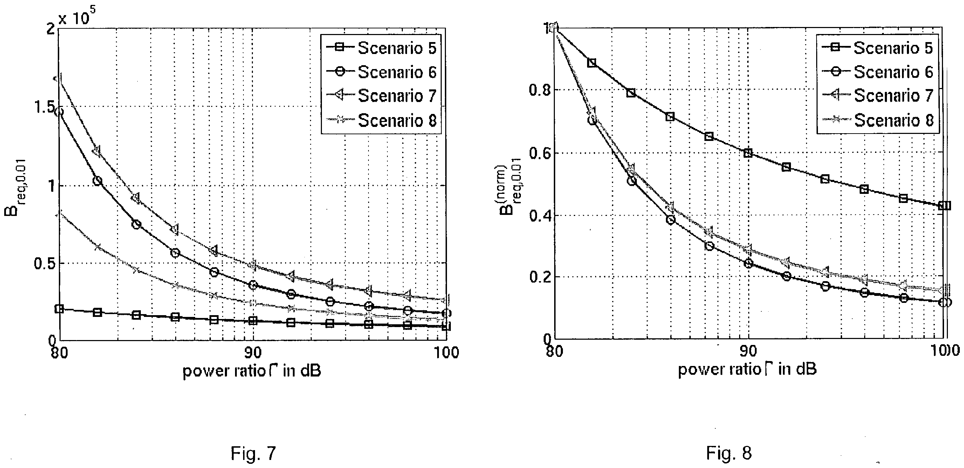

Fig. 7 shows the corresponding influence of the different Scenarios of users on the position of the power-bandwidth characteristic curves in the coordinate system. Here the power-bandwidth characteristic curves are shown for Scenarios 5 to 8, assuming 1% outage probability. It is further assumed that 100 users are simultaneously active, each one having a service quality requirement of 1 kbit/s. Comparing the power-bandwidth characteristic curves of Fig. 7 with the scenarios of Fig. 6, it can be seen that if Scenario 5 and Scenario 6 are combined and the number of users is kept constant, as it is the case in Scenario 8, the power-bandwidth characteristic curves shifts up, compared to Scenario 5, or it shifts down, compared to Scenario 6. The reason is that the users of Scenario 5 have a higher spectral efficiency than the users of Scenario 6.

Comparing the power-bandwidth characteristic curves of Scenario 7 and Scenario 8, Fig. 7 also shows that the amount of required resources doubles if the number of users is double for equal position probability.

In Fig. 8, the influence of the users on the shape of the normalized corresponding power-bandwidth characteristic curves is illustrated for the Scenarios 5 to 8, with the curves of Fig. 7 normalised to a $\Gamma$ of 80dB.. The shape of the power-bandwidth characteristic curves of Scenario 7 and Scenario 8 are the same, since in both scenarios, the same position probability of the users is assumed. Comparing these two curves to the power-bandwidth characteristic curves of Scenario 5 and Scenario 6 it can be seen that if the average spectra efficiency is increased, the shape of the curve flattens and that if the average spectral efficiency is decreased, the curve is steeper and bent stronger.

As can be taken from Figures 6, 7 and 8, changing the number and distribution of users of a BS will also change the positions and shapes of the corresponding power-bandwidth characteristic curves. This respective change in the power-bandwidth characteristic curves delivers valuable information when deciding on how to accommodate users, such as for example newcomers to the cellular network. If a BS or cell does not use all the bandwidth it is assigned, it can accommodate an additional user that shifts its power-bandwidth characteristic curve upwards. If the BS or cell operates at the limit of its assigned bandwidth, it might mitigate its situation by exchanging a user, to e.g. a neighbouring BS or cell, that causes high resource usage for a user that will shift the power-bandwidth characteristic curve downwards. The same way, the efficiency of the resource assignment of a BS or cell can be adapted by accepting or exchanging users such that the shape of the power-bandwidth characteristic curves is changed and the efficiency of the resource assignment is increased, for any number of BSs concerned.

The present invention has now been described with reference to several embodiments thereof. It will be apparent to those skilled in the art that many changes can be made in the embodiments described without departing from the scope of the present invention. Thus the scope of the present invention should not be limited to the methods and systems described in this application, but only by methods and systems described by the language of the claims and the equivalents thereof.

**Claims**

1. A method of planning and/or operating a cellular network, wherein a plurality of base stations provide resources to a number of users, the method **characterized by**,

   a. determining for a base station a power-bandwidth characteristic curve, which describes the interdependence relationship, $B_{pout}(P_S)$, between transmit power $P_S$ and bandwidth $B_{pout}$, wherein $B_{pout}$ is the bandwidth required by the base station to provide resources to $U$ users, such that the service requirement $DR_u$ of each user $u$ is satisfied with a given cell outage *probability $p_{out}$*;
   b. evaluating the slope $B_{pout}'(P_S)$ of the curve being the derivative $B_{pout}(P_S)$; and
   c. if a change of resources is requested for the base station, then:

      c1. determining, based on the evaluation, whether to change $B_{pout}$ or $P_S$ for the base station;
      c2. performing resource allocation to the base station according to the determination.

2. The method according to claim 1, wherein the power-bandwidth characteristic curve is determined by evaluating stochastic properties of the required bandwidth as functions of the transmit power.

EP 2 101 527 B1

3. The method according to claim 2, wherein the stochastic properties of the required bandwidth are given by the mean $\mu(\Gamma)$ and variance $\sigma^2(\Gamma)$ of the required bandwidth defined as functions of the power ratio $\Gamma = \dfrac{P_S}{P_N + P_I}$, wherein $P_N$ is the noise power and $P_I$ is the interference power at the location of the base station.

4. The method according to claim 3, wherein the power-bandwidth characteristic curve is determined using a specified data rate unit $DR_{unit}$, by evaluating for different power ratio values the relation

$$B(\Gamma) = erf^{-1}(1 - 2p_{out})\sqrt{2\sigma_{unit}{}^2(\Gamma)\sum_{u=1}^{U}\left(\frac{DR_u}{DR_{unit}}\right)^2} + \mu_{unit}(\Gamma)\sum_{u=1}^{U}\left(\frac{DR_u}{DR_{unit}}\right),$$

wherein $erf^{-1}$ is the inverse error function, and wherein $\mu_{unit}$ and $\sigma_{unit}$ represent stochastic properties of the bandwidth required by a single user for the transmission of the data rate unit $DR_{unit}$.

5. The method according to any of claims 3 or 4, wherein the mean $\mu(\Gamma)$ and variance $\sigma^2(\Gamma)$ of the required bandwidth are determined by calculating a probability density function of the required bandwidth.

6. The method according to any of claims 3 or 4, wherein the mean $\mu(\Gamma)$ and variance $\sigma^2(\Gamma)$ of the required bandwidth are determined by calculating a cumulative distribution function of the required bandwidth.

7. The method according to any of claims 3 to 6, wherein the mean $\mu(\Gamma)$ and variance $\sigma^2(\Gamma)$ of the required bandwidth are determined based on measurements of the attenuation values between the base station and its users.

8. The method according to any of claims 3 to 6, wherein the mean $\mu(\Gamma)$ and variance $\sigma^2(\Gamma)$ of the required bandwidth are determined on the basis of measurements of the Signal to Noise and Interference Ration SINR at the base station's users' locations.

9. The method according to claim 1, wherein the power-bandwidth characteristic curve is determined by measuring the transmit power and required bandwidth at he location of the base station.

10. The method of any of claims 7 to 9, wherein the measurements are used to calculate empirical distributions of the required bandwidth.

11. The method of any of claims 7 to 10, wherein the measurements are comprised in a single set of measurement data.

12. The method of any of claims 7 to 11, wherein the measurements are collected online during normal operation of the cellular network.

13. The method of any of the preceding claims 1 to 12, wherein a
characteristic property of a base station is the transmit power or bandwidth required by the base station.

14. The method of any of the claims 1 to 12, wherein a characteristic property of a cell is the spectral efficiency of the cell.

15. The method of claim 14, wherein the spectral efficiency of the cell served by the base station is determined on the basis of the normalized power-bandwidth characteristic curve.

16. The method of claim 15, wherein the gradient or slope of the normalized power-bandwidth characteristic curve is evaluated.

17. The method of any of the claims 1 to 12, wherein identifying a characteristic property of each base station and/or cell comprises the steps of

a. assuming different cases of reallocating at least one user of one of the base stations to become a user of another base station;

b. determining on the basis of the different cases of accommodation of users a corresponding plurality of changes in the power-bandwidth characteristic curves of the base stations;

c. determining said one of the at least one characteristic property of each base station and/or cell by evaluating the said plurality of changes in the power-bandwidth characteristic curves.

18. The method of claim 17, wherein the step of allocating resources of the cellular network comprises having a user reallocated to be accommodated by another base station.

19. The method of claim 18, wherein the reallocation of the user takes place in a self-healing process, when at least one of said base stations is unable to adequately serve its users because of malfunctioning.

20. The method of any of the claims 1 to 12, wherein identifying a characteristic property of each base station and/or cell comprises the steps of

a. assuming different cases of having base stations accommodating a new user entering the cellular network;

b. determining on the basis of the different cases of accommodating the new user a corresponding plurality of changes in the power-bandwidth characteristic curves of the base stations;

c. determining said one of the at least one characteristic property of each base station and/or cell by evaluating the plurality of changes in the power-bandwidth characteristic curves.

21. The method of claim 20, wherein the step of allocating resources of the cellular network comprises having one of the plurality of base stations accepting to provide resources to the incoming new user.

22. The method of any of the claims 17 to 21, wherein the evaluation of said plurality of changes in the power-bandwidth characteristic curve comprises determining as a characteristic property the corresponding plurality of changes in the transmit power or bandwidth required by the base station.

23. The method of any of the claims 17 to 21, wherein the evaluation of said plurality of changes in the power-bandwidth characteristic curve comprises determining as a characteristic property the corresponding plurality of changes in spectral efficiency of the cell.

24. The method of claim 23, wherein each of the said changes in spectral efficiency of the cell is determined by evaluating the change in gradient of the normalized power-bandwidth characteristic curve.

25. The method of any of the preceding claims 1 to 24, wherein the step of allocating resources in the cellular network comprises changing the amount of bandwidth disposable by at least one of the plurality of base stations.

26. The method of any of the preceding claims 1 to 25, wherein the step of allocating resources in the cellular network comprises changing the amount of transmit power required by at least one of the plurality of base stations.

27. The method of any of the preceding claims 1 to 26, wherein the step of allocating resources in the cellular network comprises minimizing the power consumption of at least one of the plurality of base stations.

28. The method of any of the preceding claims 1 to 27, wherein the step of allocating resources in the cellular network comprises optimizing the required bandwidth of at least one of the plurality of base stations.

29. The method of any of the preceding claims 1 to 28, wherein the step of allocating resources in the cellular network comprises optimizing the distribution of transmit power or bandwidth required by at least two of the plurality of base stations.

30. The method of any of the preceding claims 1 to 28, wherein the step of allocating resources in the cellular network comprises optimizing the spectral efficiency of at least one of the cells.

31. The method of any of the preceding claims 1 to 30, wherein the steps of the method are repeated in subsequent time-intervals.

32. A system of planning and/or operating a cellular network, wherein a plurality of base stations provide resources to a number of users, the system **characterized by** comprising,

means for determining for a base station a power-bandwidth characteristic curve, which describes the interdependence relationship, $B_{Pout}(P_S)$, between transmit power $P_S$ and bandwidth $B_{Pout}$, wherein $B_{Pout}$ is the bandwidth required by the base station to provide resources to $U$ users, such that the service requirement $DR_u$ of each user $u$ is satisfied with a given cell outage probability $p_{out}$;
means for evaluating the slope $B_{Pout}'(P_S)$ of the curve being the derivative $B_{Pout}(P_S)$; and means for determining, based on the evaluation, whether to change $B_{Pout}$ or $P_S$ for the base station if a change of resources is requested for the base station, and ;
means for performing resource allocation to the base station according to the determination.

## Patentansprüche

1. Verfahren zum Planen und/oder Betreiben eines Mobilfunknetzes, wobei mehrere Basisstationen Ressourcen für mehrere Benutzer bereitstellen, wobei das Verfahren **gekennzeichnet ist durch**:

   a. Bestimmen einer Leistung-Bandbreite-Kennlinie, die die wechselseitige Beziehung $B_{Pout}(P_S)$ szwischen einer Sendeleistung $P_S$ und einer Bandbreite $B_{Pout}$ beschreibt, für eine Basisstation, wobei $B_{Pout}$ die Bandbreite ist, die die Basisstation benötigt, um Ressourcen für $U$ Benutzer bereitzustellen, so dass die Dienstanforderung $DR_u$ jedes Benutzers $u$ mit einer bestimmten Zellenausfallwahrscheinlichkeit $p_{out}$ erfüllt ist;
   b. Ermitteln der Steigung $B_{Pout}'(P_S)$ der Kurve, die die Ableitung von $B_{Pout}(P_S)$ ist; und
   c. wenn eine Änderung von Ressourcen für die Basisstation angefordert wird:

      c1. Bestimmen, ob $B_{Pout}$ oder $P_S$ für die Basisstation geändert werden soll, basierend auf der Ermittlung der Steigung; und
      c2. Ausführen einer Ressourcenzuweisung zur Basisstation gemäß der Bestimmung.

2. Verfahren nach Anspruch 1, wobei die Leistung-Bandbreite-Kennlinie durch Ermitteln stochastischer Eigenschaften der benötigten Bandbreite als Funktionen der Sendeleistung bestimmt wird.

3. Verfahren nach Anspruch 2, wobei die stochastischen Eigenschaften der benötigten Bandbreite durch den Mittelwert $\mu(\Gamma)$ und die Varianz $\sigma^2(\Gamma)$ der benötigten Bandbreite gegeben sind, die als Funktionen des Leistungsverhältnisses $\Gamma = \dfrac{P_S}{P_N + P_I}$ definiert sind, wobei $P_N$ die Rauschleistung und $P_I$ die Interferenzleistung am Ort der Basisstation sind.

4. Verfahren nach Anspruch 3, wobei die Leistung-Bandbreite-Kennlinie unter Verwendung einer spezifischen Datenrateneinheit $DR_{unit}$ durch Ermitteln der Beziehung

$$B(\Gamma) = erf^{-1}(1 - 2p_{out})\sqrt{2\sigma_{unit}^2(\Gamma)\sum_{u=1}^{U}\left(\frac{DR_u}{DR_{unit}}\right)^2} + \mu_{unit}(\Gamma)\sum_{u=1}^{U}\left(\frac{DR_u}{DR_{unit}}\right),$$

für verschiedene Leistungsverhältniswerte bestimmt wird, wobei $erf^{-1}$ die inverse Fehlerfunktion ist, und wobei $\mu_{unit}$ und $\sigma_{unit}$ stochastische Eigenschaften der Bandbreite darstellen, die für einen einzelnen Benutzer zum Übertragen der Datenrateneinheit $DR_{unit}$ erforderlich ist.

5. Verfahren nach Anspruch 3 oder 4, wobei der Mittelwert $\mu(\Gamma)$ und die Varianz $\sigma^2(\Gamma)$ der benötigten Bandbreite durch Berechnen einer Wahrscheinlichkeitsdichtefunktion der benötigten Bandbreite bestimmt werden.

6. Verfahren nach Anspruch 3 oder 4, wobei der Mittelwert $\mu(\Gamma)$ und die Varianz $\sigma^2(\Gamma)$ der benötigten Bandbreite durch Berechnen einer kumulativen Verteilungsfunktion der benötigten Bandbreite bestimmt werden.

7. Verfahren nach einem der Ansprüche 3 bis 6, wobei der Mittelwert $\mu(\Gamma)$ und die Varianz $\sigma^2(\Gamma)$ der benötigten Bandbreite basierend auf Messungen von Dämpfungswerten zwischen der Basisstation und seinen Benutzer bestimmt wird.

8. Verfahren nach einem der Ansprüche 3 bis 6, wobei der Mittelwert $\mu(\Gamma)$ und die Varianz $\sigma^2(\Gamma)$ der benötigten

Bandbreite auf der Basis von Messungen des Signal/Rauschen-Plus-Interferenz-Verhältnisses SINR an den Positionen von Benutzern der Basisstation bestimmt werden.

9. Verfahren nach Anspruch 1, wobei die Leistung-Bandbreite-Kennlinie durch Messen der Sendeleistung und der benötigten Bandbreite am Ort der Basisstation bestimmt wird.

10. Verfahren nach einem der Ansprüche 7 bis 9, wobei die Messwerte zum Berechnen empirischer Verteilungen der benötigten Bandbreite verwendet werden.

11. Verfahren nach einem der Ansprüche 7 bis 10, wobei die Messwerte in einem einzigen Satz von Messdaten enthalten sind.

12. Verfahren nach einem der Ansprüche 7 bis 11, wobei die Messwerte während des normalen Betriebs des Mobilfunknetzes online gesammelt werden.

13. Verfahren nach einem der vorhergehenden Ansprüche 1 bis 12, wobei eine charakteristische Eigenschaft einer Basisstation die Sendeleistung oder die Bandbreite ist, die die Basisstation benötigt.

14. Verfahren nach einem der Ansprüche 1 bis 12, wobei eine charakteristische Eigenschaft einer Zelle die spektrale Effizienz der Zelle ist.

15. Verfahren nach Anspruch 14, wobei die spektrale Effizienz der durch die Basisstation bedienten Zelle auf der Basis der normierten Leistung-Bandbreite-Kennlinie bestimmt wird.

16. Verfahren nach Anspruch 15, wobei der Gradient oder die Steigung der normierten Leistung-Bandbreite-Kennlinie ermittelt wird.

17. Verfahren nach einem der Ansprüche 1 bis 12, wobei ein Identifizieren einer charakteristischen Eigenschaft jeder Basisstation und/oder Zelle die Schritte aufweist:

   a. Annehmen verschiedener Fälle einer Neuzuweisung mindestens eines Benutzers einer der Basisstationen derart, dass er ein Benutzer einer anderen Basisstation wird;
   b. Bestimmen einer entsprechenden Vielzahl von Änderungen der Leistung-Bandbreite-Kennlinien der Basisstationen auf der Basis der verschiedenen Fälle einer Neuzuweisung von Benutzern; und
   c. Bestimmen der einen charakteristischen Eigenschaft jeder Basisstation und/oder Zelle durch Ermitteln der mehreren Änderungen der Leistung-Bandbreite Kennlinien.

18. Verfahren nach Anspruch 17, wobei der Schritt zum Zuweisen von Ressourcen des Mobilfunknetzes beinhaltet, dass ein Benutzer, der einer anderen Basisstation neu zugewiesen wurde, durch die andere Basisstation aufgenommen wird.

19. Verfahren nach Anspruch 18, wobei das Neuzuweisen des Benutzers in einem Selbstregenerationsprozess stattfindet, wenn mindestens eine der Basisstationen aufgrund einer Fehlfunktion nicht in der Lage ist, seine Benutzer geeignet zu bedienen.

20. Verfahren nach einem der Ansprüche 1 bis 12, wobei das Identifizieren einer charakteristischen Eigenschaft jeder Basisstation und/oder Zelle die Schritte aufweist:

   a. Annehmen verschiedener Fälle, in denen Basisstationen einen in das Mobilfunknetz eintretenden neuen Benutzer aufnehmen;
   b. Bestimmen einer entsprechenden Vielzahl von Änderungen der Leistung-Bandbreite-Kennlinien der Basisstationen auf der Basis der verschiedenen Fälle einer Aufnahme von Benutzern; und
   c. Bestimmen der einen charakteristischen Eigenschaft jeder Basisstation und/oder Zelle durch Ermitteln der mehreren Änderungen der Leistung-Bandbreite Kennlinien.

21. Verfahren nach Anspruch 20, wobei der Schritt zum Zuweisen von Ressourcen des Mobilfunknetzes beinhaltet, dass eine der mehreren Basisstationen akzeptiert, Ressourcen für den ankommenden neuen Benutzer bereitzustellen.

**22.** Verfahren nach einem der Ansprüche 17 bis 21, wobei das Ermitteln der mehreren Änderungen der Leistung-Bandbreite-Kennlinie das Bestimmen der entsprechenden mehreren Änderungen der Sendeleistung oder der Bandbreite, die durch die Basisstation benötigt wird, als eine charakteristische Eigenschaft aufweist.

**23.** Verfahren nach einem der Ansprüche 17 bis 21, wobei das Ermitteln der mehreren Änderungen der Leistung-Bandbreite-Kennlinie das Bestimmen der entsprechenden mehreren Änderungen der spektralen Effizienz der Zelle als eine charakteristische Eigenschaft aufweist.

**24.** Verfahren nach Anspruch 23, wobei jede der Änderungen der spektralen Effizienz der Zelle durch Ermitteln der Änderung des Gradienten der normierten Leistung-Bandbreite-Kennlinie bestimmt wird.

**25.** Verfahren nach einem der vorangehenden Ansprüche 1 bis 24, wobei der Schritt zum Zuweisen von Ressourcen im Mobilfunknetz das Ändern der Bandbreitenmenge aufweist, die für mindestens eine der mehreren Basisstationen entbehrlich ist.

**26.** Verfahren nach einem der vorangehenden Ansprüche 1 bis 25, wobei der Schritt zum Zuweisen von Ressourcen im Mobilfunknetz das Ändern der Sendeleistung aufweist, die durch mindestens eine der mehreren Basisstationen benötigt wird.

**27.** Verfahren nach einem der vorhergehenden Ansprüche 1 bis 26, wobei der Schritt zum Zuweisen von Ressourcen im Mobilfunknetz das Minimieren des Leistungsverbrauchs mindestens einer der mehreren Basisstationen aufweist.

**28.** Verfahren nach einem der vorhergehenden Ansprüche 1 bis 27, wobei der Schritt zum Zuweisen von Ressourcen im Mobilfunknetz das Optimieren der benötigten Bandbreite mindestens einer der mehreren Basisstationen aufweist.

**29.** Verfahren nach einem der vorhergehenden Ansprüche 1 bis 28, wobei der Schritt zum Zuweisen von Ressourcen im Mobilfunknetz das Optimieren der Verteilung der Sendeleistung oder der Bandbreite aufweist, die durch mindestens zwei der mehreren Basisstationen benötigt wird.

**30.** Verfahren nach einem der vorhergehenden Ansprüche 1 bis 28, wobei der Schritt zum Zuweisen von Ressourcen im Mobilfunknetz das Optimieren der spektralen Effizienz mindestens einer der Zellen aufweist.

**31.** Verfahren nach einem der vorhergehenden Ansprüche 1 bis 30, wobei die Schritte des Verfahrens in aufeinanderfolgenden Zeitintervallen wiederholt werden.

**32.** System zum Planen und/oder Betreiben eines Mobilfunknetzes, wobei mehrere Basisstationen Ressourcen für mehrere Benutzer bereitstellen, wobei das System **dadurch gekennzeichnet ist, dass** das System aufweist:

eine Einrichtung zum Bestimmen einer Leistung-Bandbreite-Kennlinie, die die wechselseitige Beziehung $B_{Pout}(P_S)$ zwischen einer Sendeleistung $P_S$ und einer Bandbreite $B_{Pout}$ beschreibt, für eine Basisstation, wobei $B_{Pout}$ die Bandbreite ist, die die Basisstation benötigt, um Ressourcen für U Benutzer bereitzustellen, so dass die Dienstanforderung $DR_u$ jedes Benutzers *u* mit einer bestimmten Zellenausfallwahrscheinlichkeit $p_{out}$ erfüllt ist;
eine Einrichtung zum Ermitteln der Steigung $B_{Pout}'(P_S)$ der Kurve, die eine Ableitung von $B_{Pout}(P_S)$ ist; und
eine Einrichtung zum Bestimmen, ob $B_{Pout}(P_S)$ oder $P_S$ für die Basisstation geändert werden soll, wenn eine Änderung von Ressourcen für die Basisstation angefordert wird, basierend auf der Ermittlung der Steigung; und
eine Einrichtung zum Ausführen einer Ressourcenzuweisung zur Basisstation gemäß der Bestimmung.

**Revendications**

**1.** Procédé de planification et/ou d'exploitation d'un réseau cellulaire, dans lequel une pluralité de stations de base fournissent des ressources à un certain nombre d'utilisateurs, le procédé étant **caractérisé par**,

a. la détermination, pour une station de base, d'une courbe de caractéristiques de largeur de bande et de puissance, qui décrit la relation d'interdépendance, $B_{Pout}(P_S)$, entre la puissance de transmission $P_S$ et la largeur de bande $B_{Pout}$, dans laquelle $B_{Pout}$ représente la largeur de bande requise par la station de base pour fournir des ressources à U utilisateurs, de manière à ce qu'il soit satisfait à la condition de service DR*u* de chaque utilisateur *u* avec une probabilité d'interruption de cellule donnée $P_{out}$ ;

    b. l'évaluation de la pente $B_{Pout}'(P_S)$ de la courbe étant la dérivée $B_{Pout}(P_S)$ ; et

    c. si un changement de ressources est demandé pour la station de base, alors :

        c1. l'opération consistant à déterminer, sur la base de l'évaluation, s'il convient de changer $B_{Pout}$ ou $P_S$ pour la station de base ;

        c2. la réalisation d'une affectation de ressources à la station de base en fonction de la détermination.

**2.** Procédé selon la revendication 1, dans lequel la courbe de caractéristiques de largeur de bande et de puissance est déterminée en évaluant les propriétés stochastiques de la largeur de bande requise en fonction de la puissance de transmission.

**3.** Procédé selon la revendication 2, dans lequel les propriétés stochastiques de la largeur de bande requise sont données par la moyenne $\mu(\Gamma)$ et la variance $\sigma^2(\Gamma)$ de la largeur de bande requise définie en fonction du rapport de puissance $\Gamma = \dfrac{P_S}{P_N + P_I}$, formule dans laquelle $P_N$ représente la puissance de bruit et $P_I$ représente la puissance perturbatrice à l'emplacement de la station de base.

**4.** Procédé selon la revendication 3, dans lequel la courbe de caractéristiques de largeur de bande et de puissance est déterminée en utilisant une unité de débit spécifiée $DR_{unité}$, en évaluant pour différentes valeurs de rapport de puissance la relation

$$B(\Gamma) = erf^{-1}(1 - 2p_{out})\sqrt{2\sigma_{unit}^2(\Gamma)\sum_{u=1}^{U}\left(\frac{DR_u}{DR_{unit}}\right)^2 + \mu_{unit}(\Gamma)\sum_{u=1}^{U}\left(\frac{DR_u}{DR_{unit}}\right)},$$

dans laquelle $erf^{-1}$ représente la fonction d'erreur inverse, et dans laquelle $\mu_{unité}$ et $\sigma_{unité}$ représentent les propriétés stochastiques de la largeur de bande requise par un seul utilisateur pour la transmission de l'unité de débit $DR_{unité}$.

**5.** Procédé selon l'une quelconque des revendications 3 ou 4, dans lequel la moyenne $\mu(\Gamma)$ et la variance $\sigma^2(\Gamma)$ de la largeur de bande requise sont déterminées en calculant une fonction de densité de probabilité de la largeur de bande requise.

**6.** Procédé selon l'une quelconque des revendications 3 ou 4, dans lequel la moyenne $\mu(\Gamma)$ et la variance $\sigma^2(\Gamma)$ de la largeur de bande requise sont déterminées en calculant une fonction de distribution cumulée de la largeur de bande requise.

**7.** Procédé selon l'une quelconque des revendications 3 à 6, dans lequel la moyenne $\mu(\Gamma)$ et la variance $\sigma^2(\Gamma)$ de la largeur de bande requise sont déterminées d'après les mesures des valeurs d'atténuation entre la station de base et ses utilisateurs.

**8.** Procédé selon l'une quelconque des revendications 3 à 6, dans lequel la moyenne $\mu(\Gamma)$ et la variance $\sigma^2(\Gamma)$ de la largeur de bande requise sont déterminées d'après les mesures du rapport signal sur bruit plus brouillage SINR aux emplacements des utilisateurs de la station de base.

**9.** Procédé selon la revendication 1, dans lequel la courbe de caractéristiques de largeur de bande et de puissance est déterminée en mesurant la puissance de transmission et la largeur de bande requise à l'emplacement de la station de base.

**10.** Procédé selon l'une quelconque des revendications 7 à 9, dans lequel les mesures sont utilisées pour calculer les distributions empiriques de la largeur de bande requise.

11. Procédé selon l'une quelconque des revendications 7 à 10, dans lequel les mesures sont comprises dans un seul ensemble de données de mesure.

12. Procédé selon l'une quelconque des revendications 7 à 11, dans lequel les mesures sont collectées en ligne au cours du fonctionnement normal du réseau cellulaire.

13. Procédé selon l'une quelconque des revendications précédentes 1 à 12, dans lequel une propriété caractéristique d'une station de base est la puissance de transmission ou la largeur de bande requise par la station de base.

14. Procédé selon l'une quelconque des revendications 1 à 12, dans lequel une propriété caractéristique d'une cellule est l'efficacité spectrale de la cellule.

15. Procédé selon la revendication 14, dans lequel l'efficacité spectrale de la cellule servie par la station de base est déterminée d'après la courbe normalisée de caractéristiques de largeur de bande et de puissance.

16. Procédé selon la revendication 15, dans lequel le gradient ou la pente de la courbe normalisée de caractéristiques de largeur de bande et de puissance est évalué(e).

17. Procédé selon l'une quelconque des revendications 1 à 12, dans lequel l'identification d'une propriété caractéristique de chaque station de base et/ou cellule comprend les étapes suivantes

    a. hypothèse de différents cas de réaffectation d'au moins un utilisateur de l'une des stations de base pour devenir un utilisateur d'une autre station de base ;
    b. détermination d'après les différents cas d'accommodation d'utilisateurs d'une pluralité correspondante de changements des courbes de caractéristiques de largeur de bande et de puissance des stations de base ;
    c. détermination de ladite une de l'au moins une propriété caractéristique de chaque station de base et/ou cellule en évaluant ladite pluralité de changements des courbes de caractéristiques de largeur de bande et de puissance.

18. Procédé selon la revendication 17, dans lequel l'étape d'affectation de ressources du réseau cellulaire comprend la réaffectation d'un utilisateur à accommoder par une autre station de base.

19. Procédé selon la revendication 18, dans lequel la réaffectation de l'utilisateur a lieu dans un procédé autorégénérateur, lorsqu'au moins l'une desdites stations de base est incapable de servir correctement ses utilisateurs en raison de dysfonctionnements.

20. Procédé selon l'une quelconque des revendications 1 à 12, dans lequel l'identification d'une propriété caractéristique de chaque station de base et/ou cellule comprend les étapes suivantes

    a. hypothèse de différents cas de stations de base accommodant un nouvel utilisateur entrant dans le réseau cellulaire ;
    b. détermination d'après les différents cas d'accommodation du nouvel utilisateur d'une pluralité correspondante de changements des courbes de caractéristiques de largeur de bande et de puissance des stations de base ;
    c. détermination de ladite une de l'au moins une propriété caractéristique de chaque station de base et/ou cellule en évaluant la pluralité de changements des courbes de caractéristiques de largeur de bande et de puissance.

21. Procédé selon la revendication 20, dans lequel l'étape d'affectation de ressources du réseau cellulaire comprend l'opération à faire accepter, à l'une de la pluralité de stations de base, de fournir des ressources au nouvel utilisateur entrant.

22. Procédé selon l'une quelconque des revendications 17 à 21, dans lequel l'évaluation de ladite pluralité de changements de la courbe de caractéristiques de largeur de bande et de puissance comprend la détermination en tant que propriété caractéristique de la pluralité correspondante de changements de la puissance de transmission ou de la largeur de bande requise par la station de base.

23. Procédé selon l'une quelconque des revendications 17 à 21, dans lequel l'évaluation de ladite pluralité de changements de la courbe de caractéristiques de largeur de bande et de puissance comprend la détermination, en tant que propriété caractéristique, de la pluralité correspondante de changements d'efficacité spectrale de la cellule.

24. Procédé selon la revendication 23, dans lequel chacun desdits changements d'efficacité spectrale de la cellule est déterminé en évaluant le changement de gradient de la courbe normalisée de caractéristiques de largeur de bande et de puissance.

25. Procédé selon l'une quelconque des revendications précédentes 1 à 24, dans lequel l'étape d'affectation de ressources dans le réseau cellulaire comprend le changement de la quantité de largeur de bande disponible pour au moins l'une de la pluralité de stations de base.

26. Procédé selon l'une quelconque des revendications précédentes 1 à 25, dans lequel l'étape d'affectation de ressources dans le réseau cellulaire comprend le changement de la quantité de puissance de transmission requise par au moins l'une de la pluralité de stations de base.

27. Procédé selon l'une quelconque des revendications précédentes 1 à 26, dans lequel l'étape d'affectation de ressources dans le réseau cellulaire comprend la réduction au maximum de la consommation d'énergie d'au moins l'une de la pluralité de stations de base.

28. Procédé selon l'une quelconque des revendications précédentes 1 à 27, dans lequel l'étape d'affectation de ressources dans le réseau cellulaire comprend l'optimisation de la largeur de bande requise d'au moins l'une de la pluralité de stations de base.

29. Procédé selon l'une quelconque des revendications précédentes 1 à 28, dans lequel l'étape d'affectation de ressources dans le réseau cellulaire comprend l'optimisation de la distribution de la puissance de transmission ou de la largeur de bande requise par au moins deux de la pluralité de stations de base.

30. Procédé selon l'une quelconque des revendications précédentes 1 à 28, dans lequel l'étape d'affectation de ressources dans le réseau cellulaire comprend l'optimisation de l'efficacité spectrale d'au moins l'une des cellules.

31. Procédé selon l'une quelconque des revendications précédentes 1 à 30, dans lequel les étapes du procédé sont répétées à intervalles de temps successifs.

32. Système de planification et/ou d'exploitation d'un réseau cellulaire, dans lequel une pluralité de stations de base fournit des ressources à un certain nombre d'utilisateurs, le système étant **caractérisé par le fait qu'**il comprend, des moyens de détermination, pour une station de base, d'une courbe de caractéristiques de largeur de bande et de puissance, qui décrit la relation d'interdépendance, $B_{Pout}(P_S)$, entre la puissance de transmission $P_S$ et la largeur de bande $B_{Pout}$, dans laquelle $B_{Pout}$ représente la largeur de bande requise par la station de base pour fournir des ressources à U utilisateurs, de manière à ce que la condition de service $DR_u$ de chaque utilisateur $u$ soit satisfaite avec une probabilité d'interruption de cellule donnée $p_{out}$ ; des moyens d'évaluation de la pente $B_{Pout}'(P_S)$ de la courbe étant la dérivée $B_{Pout}(P_S)$ ; et des moyens consistant à déterminer, sur la base de l'évaluation, s'il convient de changer $B_{Pout}$ ou $P_S$ pour la station de base si un changement de ressources est demandé pour la station de base, et ; des moyens de réalisation de l'affectation de ressources à la station de base en fonction de la détermination.

Fig. 1a

EP 2 101 527 B1

Fig. 1b

Scenario 2

| | |
|---|---|
| ─×─ | γ= 80dB |
| ─▽─ | γ= 82dB |
| ─□─ | γ= 84dB |
| ─○─ | γ= 86dB |
| ─△─ | γ= 88dB |
| | γ= 90dB |
| ─◆─ | γ= 92dB |
| ─✳─ | γ= 94dB |
| ─▽─ | γ= 96dB |
| ─□─ | γ= 98dB |
| ─○─ | γ=100dB |

$p(B>B_{req})$

required bandwidth $B_{req}$

x 10$^4$

Scenario 1

| | |
|---|---|
| ─×─ | γ= 80dB |
| ─▽─ | γ= 82dB |
| ─□─ | γ= 84dB |
| ─○─ | γ= 86dB |
| ─△─ | γ= 88dB |
| | γ= 90dB |
| ─◆─ | γ= 92dB |
| ─✳─ | γ= 94dB |
| ─▽─ | γ= 96dB |
| ─□─ | γ= 98dB |
| ─○─ | γ=100dB |

$p(B>B_{req})$

required bandwidth $B_{req}$

x 10$^4$

Fig. 2a

Fig. 2b

EP 2 101 527 B1

Fig. 3a

Fig. 3b

Fig. 4

Fig. 5

Fig. 6a

Fig. 6b

Fig. 8

Fig. 7

27

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0949832 A

- DE 10309618 A

**Non-patent literature cited in the description**

- **J. ZANDER ; S.-L. KIM.** Radio Resource Management For Wireless Network. Artech House, 2001

- **C. SHANNON.** A mathematical Theory of Communication. *Tech. Rep., Bell Systems Technical Journal,* 1948